# EUROPÄISCHE PATENTSCHRIFT

(11) **EP 4 168 223 B1**
(45) Veröffentlichungstag und Bekanntmachung des Hinweises auf die Patenterteilung: **05.06.2024**
(21) Anmeldenummer: 21730840.2
(22) Anmeldetag: 01.06.2021
(51) Int. Cl.: B28C 5/08, B28B 1/00, B28C 5/12, B33Y 30/00, B01F 27/90, B01F 35/10, B01F 35/511

(54) **DÜSE ZUM AUSBRINGEN VON BETON, MÖRTEL ODER DERGLEICHEN**
NOZZLE FOR DISPENSING CONCRETE, MORTAR OR THE LIKE
BUSE POUR DISTRIBUER DU BÉTON, DU MORTIER OU SIMILAIRE

(30) Priorität: 23.06.2020 DE 102020003760
(43) Veröffentlichungstag der Anmeldung: 26.04.2023
(73) Patentinhaber: MAI International GmbH, 9710 Feistritz/Drau (AT)
(72) Erfinder: KAMPITSCH, Klaus, 9701 Kamering (AT); KAMPITSCH, David, 9711 Paternion (AT)
(74) Vertreter: Beyer, Andreas
(86) Internationale Anmeldenummer: PCT/EP2021/064593
(87) Internationale Veröffentlichungsnummer: WO 2021/259595

(56) Entgegenhaltungen:
- EP-A1- 3 431 172
- WO-A1-94/00229
- GB-A- 2 134 220
- JP-A- S60 153 928
- US-A1- 2002 100 519

## Beschreibung

Die vorliegende Erfindung betrifft eine Düse zum Ausbringen von Beton, Mörtel oder dergleichen. Solche Düsen sind grundsätzlich bekannt, beispielsweise im Zusammenhang mit der Verarbeitung von Spritzbeton. Wenn ein schnelles Aushärten des zu verarbeitenden Betons, Mörtels oder dergleichen gewünscht ist, kann dem Beton, Mörtel oder dergleichen kurz vor dem Ausbringen ein Zusatzstoff zugesetzt werden, der idealerweise bereits in der Düse innig mit dem auszubringenden Beton, Mörtel oder dergleichen vermischt wird.

Aus der EP 3 431 172 A1 ist eine solche Düse bekannt, die bei geeigneter Dimensionierung eines als Mischkammer dienenden Mischrohrs auch zum 3D-Druck von Beton, Mörtel oder dergleichen verwendet werden kann. Bei solchen Düsen besteht allgemein das Problem, dass aufgrund des zugemischten Zusatzstoffes, der die Aushärtung des Betons, Mörtels oder dergleichen beschleunigt, sich innerhalb der Düse vermehrt Ablagerungen bilden können, insbesondere wenn der Durchfluss durch die Düse zeitweilig gestoppt und dann wieder aufgenommen wird. Diese sich relativ schnell verfestigenden Ablagerungen können den ordnungsgemäßen Betrieb der Düse bis hin zum Totalausfall stören.

Aus der WO 94/00229 A1 ist eine Agglomerationsvorrichtung bekannt, die aus einer Kammer besteht, in die aus einem Vorratsbehälter über eine Schleuse und einen Feststoffeinlass feine pulverförmige Partikel eingeleitet werden, um aus diesen feinen Partikeln Agglomerate zu bilden. Dazu wird in die Kammer eine geringe Menge an Flüssigkeit in durch einen Zerstäuber feinstverteilter Form eingeleitet. Diese fein zerstäubte Flüssigkeit, die sich zum Teil auch an der Innenwand der Kammer niederschlägt, führt zum Zusammenkleben pulverförmiger Partikel und damit zur Bildung von Agglomeraten. Die Agglomeration wird unterstützt durch einen in der Kammer angeordneten Rotor, der durch einen Motor in Drehung versetzt wird und dafür sorgt, dass das in der Kammer enthaltene Gas in eine ausgeprägte Zirkulationsbewegung versetzt wird. Im Rahmen des Agglomerationsvorgangs bildet sich eine Schicht aus agglomerierten Partikeln, die sich an der Innenwand der Kammer absetzen. Durch eine pulsierende wellenförmige Bewegung der Innenseite der Kammer wird diese Schicht komprimiert, was eine Agglomeratbildung fördert, und anschließend gedehnt, wodurch gebildete Agglomerate aufgebrochen und von der Innenseite der Kammerwand gelöst werden. Eine ebensolche Wellenbewegung des Bodens der Kammer fördert die gebildeten Agglomerate zu einem Produktauslass der Kammer.

Die JP S60 153928 A offenbart eine Chargenmischanlage für hochviskose Materialen.

Der vorliegenden Erfindung liegt daher die Aufgabe zugrunde, eine Düse zum Ausbringen von Beton, Mörtel oder dergleichen anzugeben, die hinsichtlich solcher sich in ihr bildender Ablagerungen toleranter und damit störungsunanfälliger ist.

Diese Aufgabe ist mit einer Düse gelöst, die die im Patentanspruch 1 angegebenen Merkmale aufweist. Die Düse hat ein Gehäuse und eine darin angeordnete, durch eine Umfangswand begrenzte Mischkammer, die sich entlang einer Längsachse zumindest zwischen einer Zufuhröffnung und einer Austrittsöffnung erstreckt. In der Mischkammer befindet sich eine aktiv antreibbare Mischeinrichtung. Die Düse weist ferner ein Düsenelement mit einer Austragsöffnung auf, die mittelbar oder unmittelbar mit der Austrittsöffnung der Mischkammer in strömungsleitender Verbindung steht. Um die Umfangswand der Mischkammer herum ist erfindungsgemäß wenigstens ein sich axial und in Umfangsrichtung erstreckender Hohlraum ausgebildet, der in Kontakt mit der Umfangswand steht und die Mischkammer in Umfangsrichtung zumindest im Wesentlichen umgibt. Mit "in Umfangsrichtung zumindest im Wesentlichen umgibt" ist hier gemeint, dass der wenigstens eine Hohlraum den größten Teil des Umfangs der

Mischkammer umgibt oder sich sogar vollständig um die Mischkammer herum erstreckt. Kleinere Unterbrechungen dieser Erstreckung sind allerdings unschädlich, wie im Folgenden noch erläutert werden wird. Mit "in Kontakt mit der Umfangswand steht" ist hier gemeint, dass die Außenseite der die Mischkammer begrenzenden Umfangswand zumindest einen Teil der inneren Begrenzung des Hohlraums bildet. Erfindungsgemäß besteht ferner die Umfangswand der Mischkammer aus elastischem Material, welches sich im Betrieb der Düse in den wenigstens einen Hohlraum hinein verformen kann. Als elastisches Material für die Umfangswand der Mischkammer sind beispielsweise natürliche und synthetische Gummi- bzw. Kautschukmaterialien geeignet, ebenso elastische Kunststoffe und ähnliches. Die Elastizität des verwendeten elastischen Materials wird in Abhängigkeit von den mit der Düse auszubringenden Stoffen so gewählt, dass die im Betrieb der Düse in der Mischkammer auftretenden, auf die Umfangswand der Mischkammer wirkenden Drücke und Beanspruchungen zu zeitweiligen zumindest lokalen Verformungen der Mischkammerumfangswand in den wenigstens einen Hohlraum hinein führen. Es versteht sich somit, dass es sich bei den genannten Verformungen der Mischkammerumfangswand nicht um bleibende Verformungen handelt, sondern um reversible Verformungen, derart, dass die Umfangswand der Mischkammer nach einer Beendigung des Betriebs der Düse immer wieder in ihren Ausgangszustand zurückkehrt. Es versteht sich auch, dass das elastische Material hinsichtlich seiner Eigenschaften so ausgewählt werden muss, dass es den im Betrieb der Düse auftretenden Beanspruchungen Stand halten kann (im Hinblick auf Stabilität, chemische Beständigkeit, Abrasionsbeständigkeit etc.).

Der zuvor genannte, wenigstens eine Hohlraum ist erfindungsgemäß jedenfalls im Betriebszustand der Düse vorhanden. Es sind Ausgestaltungen denkbar, bei denen der wenigstens eine Hohlraum in einem Ruhezustand der Düse nicht mehr existiert und erst im Betriebszustand erzeugt wird, beispielsweise durch unter Druck setzen eines entsprechenden Bereichs auf der Außenseite der Mischkammerumfangswand derart, dass die Mischkammerumfangswand sich radial einwärts in eine Betriebsposition bewegt, in der außerhalb der Mischkammerumfangswand dann der wenigstens eine Hohlraum vorhanden ist.

Die erfindungsgemäßen Merkmale haben zur Folge, dass im Betrieb einer erfindungsgemäßen Düse die Umfangswand der Mischkammer sich nicht statisch verhält, sondern ihre Gestalt aufgrund der in den wenigstens einen Hohlraum hinein erfolgenden Verformungen ständig ändert. Dadurch wird verhindert, dass sich Ablagerungen an der Innenseite der Umfangswand der Mischkammer festsetzen, und es wird auch erreicht, dass an der Innenseite der Mischkammerumfangswand bereits anhaftende Ablagerungen sich wieder von der Umfangswand lösen, indem sie sozusagen von der Umfangswand abplatzen. Das Auftreten größerer, den Betrieb der Düse störender Ablagerungen kann somit weitestgehend vermieden werden.

Die Mischkammer einer erfindungsgemäßen Düse hat bei bevorzugten Ausgestaltungen der Düse eine kreiszylindrische, rohrförmige Gestalt, so dass die Mischkammer dann auch als Mischrohr bezeichnet werden kann. Eine solche kreiszylindrische Ausgestaltung der Mischkammer stellt jedoch für das Funktionieren einer erfindungsgemäßen Düse keine notwendige Voraussetzung dar, weshalb auch Mischkammern zum Einsatz kommen können, die keine kreiszylindrische Gestalt haben.

Der wenigstens eine Hohlraum, der in Kontakt mit der Umfangswand steht und die Mischkammer in Umfangsrichtung zumindest im Wesentlichen umgibt, kann sich über zumindest im Wesentlichen die gesamte Länge der Mischkammer erstrecken. Dadurch kann sichergestellt werden, dass es über die gesamte Länge der Mischkammer hinweg zu keinen störenden Ablagerungen an der Innenseite der Mischkammerumfangswand kommt.

Bei anderen Ausführungsformen können über die Länge der Mischkammer gesehen mehrere axial aufeinanderfolgende Hohlräume vorhanden sein, die jeweils die Mischkammer in Umfangsrichtung zumindest im Wesentlichen umgeben. Dadurch ist es beispielsweise möglich, die Umfangswand der Mischkammer mehrteilig auszugestalten, so dass bei einem Versagen oder einem übermäßigen Verschleiß der Mischkammerumfangswand jeweils nur der betroffene Teil der Umfangswand ausgetauscht zu werden braucht.

Unabhängig davon, ob nur ein Hohlraum oder deren mehrere vorhanden sind, zeichnen sich vorteilhafte Ausführungsformen der erfindungsgemäßen Düse dadurch aus, dass eine Druckaufbringungseinrichtung vorhanden ist, die mit dem wenigstens einen Hohlraum verbunden ist, um durch Aufbringen von Druck auf die Mischkammerumfangswand letztere in die Mischkammer hinein zu verformen. Dieses in die Mischkammer hinein Verformen der Umfangswand kann so weit gehen, dass die Innenseite der Mischkammerumfangswand in Kontakt mit der sich im Betrieb der Düse drehenden Mischeinrichtung gelangt, wodurch die Mischeinrichtung eventuell an der Innenseite der Mischkammerumfangswand anhaftende Ablagerungen abstreifen kann. Gleichzeitig können durch den Kontakt der sich drehenden Mischeinrichtung mit der Mischkammerumfangswand auch an der Mischeinrichtung befindliche Ablagerungen entfernt werden. Bei Ausführungsformen der erfindungsgemäßen Düse, die mit einer Druckaufbringungseinrichtung versehen sind, ist es daher möglich, dass sich die Umfangswand der Mischkammer im Betrieb sowohl in den Hohlraum hinein als auch in die Mischkammer hinein verformt, wobei letzteres durch den von der Druckaufbringungseinrichtung aufgebrachten Druck gesteuert wird. Der erfindungsgemäß erreichte und erwünschte Effekt wird auf diese Weise verstärkt. Bei Vorhandensein mehrerer Hohlräume müssen nicht alle Hohlräume mit einer Druckaufbringungseinrichtung verbunden sein. Es kann vielmehr ausreichen, wenn diejenigen Hohlräume mit einer Druckaufbringungseinrichtung verbunden sind, die Bereiche der Mischkammer umgeben, welche für eine interne Verschmutzung oder Bildung von Ablagerungen besonders anfällig sind.

Falls gewünscht können der Hohlraum, manche der mehreren Hohlräume oder alle Hohlräume auch ganz oder teilweise mit einem Material gefüllt sein, welches die erfindungsgemäße Funktion des Hohlraums bzw. der Hohlräume nicht außer Kraft setzt. Beispielsweise kann in dem Hohlraum bzw. in den Hohlräumen ein elastisches Schaumstoffmaterial enthalten sein. Auch kann in dem Hohlraum bzw. in den Hohlräumen - zusätzlich oder alternativ zum vorgenannten Schaumstoffmaterial - eine Flüssigkeit enthalten sein, die z.B. zur Beheizung oder Kühlung der Mischkammer dienen kann. Zu achten ist dann jedoch darauf, dass eine solche Flüssigkeit den entsprechenden Hohlraum entweder nicht vollständig ausfüllt oder dass der Hohlraum mit einem Ausdehnungsgefäß verbunden ist, da ansonsten eine erfindungsgemäß erwünschte Verformung der Mischkammerumfangswand in den Hohlraum hinein kaum mehr möglich wäre.

Gemäß einer Ausgestaltung ist die Mischkammer als ein Einsatz ausgebildet, der in die Düse einsetzbar ist. Ein solcher Einsatz kann beispielsweise aus einem geeigneten Kunststoff bestehen. Die Mischkammerumfangswand kann bei einem solchen Einsatz doppelwandig ausgeführt sein, so dass der Hohlraum, manche der mehreren Hohlräume oder alle Hohlräume Bestandteil des Einsatzes sein können, indem er bzw. sie zwischen einer radial inneren und einer radial äußeren Mischkammerumfangswand vorgesehen ist bzw. sind.

Bevorzugte Ausgestaltungen der erfindungsgemäßen Düse enthalten ein Strömungsquerschnittreduzierungselement, welches in einem die Austrittsöffnung der Mischkammer umfassenden Endabschnitt der Mischkammer bezogen auf den Querschnitt der Mischkammer mittig angeordnet ist. Ferner ist bei solchen Ausgestaltungen einer der mehreren Hohlräume so angeordnet, dass er den Bereich der Mischkammer in Umfangsrichtung vollständig umgibt, in dem das Strömungsquerschnittreduzierungselement angeordnet ist. Gemäß einer Weiterbildung solcher Ausgestaltungen ist der Teil der Umfangswand, der dem im Bereich des Strömungsquerschnittreduzierungselements angeordneten Hohlraum zugehörig ist, durch Aufbringen von Druck in die Mischkammer hinein so weit verformbar, bis die Innenseite der Mischkammerumfangswand am Strömungsquerschnittreduzierungselement anliegt. Auf diese Weise kann durch eine einfach und schnell erfolgende Verformung des entsprechenden Teils der Mischkammerumfangswand eine erfindungsgemäße Düse abgesperrt und anschließend durch Druckentlastung wieder geöffnet werden.

Das zuvor erwähnte Aufbringen von Druck auf zumindest einen Teil der Umfangswand erfolgt vorzugsweise pneumatisch, hydraulisch oder mechanisch, d. h. durch unter Druck setzen des jeweiligen Hohlraums oder durch eine mechanische Druckbeaufschlagung der Mischkammerumfangswand, die beispielsweise durch kolbenartige Stempel oder auch durch ein um den entsprechenden Bereich der Mischkammerumfangswand herum angeordnetes Irisventil erreicht werden kann.

Das Strömungsquerschnittreduzierungselement ist bei manchen Ausführungsformen an einem Flansch befestigt, der sich zwischen der Austrittsöffnung der Mischkammer und der Austragsöffnung der Düse befindet. Auf diese Weise ist ein einfacher Austausch des Strömungsquerschnittreduzierungselements möglich, beispielsweise um das Strömungsquerschnittsreduzierungselement zu ersetzen oder gegen ein anders geformtes Strömungsquerschnittreduzierungselement auszutauschen.

Bei anderen Ausführungsformen ist das Strömungsquerschnittreduzierungselement an dem die Austragsöffnung bildenden Düsenelement befestigt. Auf diese Weise kann einfach sichergestellt werden, dass ein für ein bestimmtes Düsenelement besonders geeignetes Strömungsquerschnittreduzierungselement zusammen mit diesem Düsenelement verwendet wird.

Die in der erfindungsgemäßen Düse befindliche Mischeinrichtung kann auch als Mischwerk bezeichnet werden. Übliche Mischeinrichtungen bzw. Mischwerke können zum Einsatz kommen, sofern der gewünschte Vermischungszustand durch sie erreicht bzw. sichergestellt werden kann. Als Mischeinrichtung kann beispielsweise eine Misch- oder Rührwelle dienen, die drehend angetrieben wird.

Die Mischeinrichtung erstreckt sich vorzugsweise zumindest von der Zufuhröffnung bis in einen die Austrittsöffnung der Mischkammer umfassenden Endabschnitt der Mischkammer. Damit kann eine gute Durchmischung des mit der Düse auszubringenden Stoffgemisches erreicht werden und zugleich verhindert werden, dass sich in der Mischkammer Ablagerungen bilden. Bei bevorzugten Ausführungsformen der erfindungsgemäßen Düse ist die Mischeinrichtung eine sich zumindest im Wesentlichen axial erstreckende, drehbare Mischwelle. Eine solche Mischwelle kann in üblicher Weise mit einer Reihe von Rührorganen wie z. B. Flügeln, Scheiben und ähnlichem versehen sein, die eine gute Durchmischung fördern.

Bei Ausführungsformen der erfindungsgemäßen Düse, bei der die Mischeinrichtung als Mischwelle oder zumindest mischwellenartig ausgebildet ist, kann das Strömungsquerschnittreduzierungselement Teil der Mischwelle sein, indem die Mischwelle an ihrem der Austrittsöffnung der Mischkammer zugewandten Ende einen verdickten Mischwellenkopf aufweist, der den Strömungsquerschnitt der Mischkammer reduziert.

Unabhängig davon, ob das Strömungsquerschnittreduzierungselement Teil der Mischeinrichtung ist oder nicht, ist es bei bevorzugten Ausführungsformen der erfindungsgemäßen Düse kugelförmig oder tropfenförmig ausgebildet, wobei bei einer tropfenförmigen Ausbildung das spitze Ende der Tropfenform der Austragsöffnung der Düse zugewandt ist.

Zur effizienten Einbringung eines oder mehrerer Zusatzstoffe in die Mischkammer weisen bevorzugte Ausgestaltungen der erfindungsgemäßen Düse eine Zusatzöffnung auf, die konzentrisch zur Zufuhröffnung angeordnet ist. Auf diese Weise erfolgt die Zuführung des Hauptmaterials und eventueller Zusatzstoffe an derselben Stelle der Mischkammer, was einer innigen Vermischung von Hauptmaterial und Zusatzstoff(en) förderlich ist. Alternativ oder zusätzlich kann jedoch mindestens eine Zusatzöffnung vorgesehen sein, die an einer anderen Stelle der Mischkammer angeordnet ist als die Zufuhröffnung.

Um das mittels der Düse auszubringende Stoffgemisch möglichst flexibel und exakt positioniert ausbringen zu können, ist bei vorteilhaften Ausgestaltungen der erfindungsgemäßen Düse die Austragsöffnung Teil eines beweglichen Düsenelements, welches gemäß einer Weiterbildung auch motorisch verstellbar sein kann.

Mehrere Ausgestaltungen einer erfindungsgemäßen Düse werden im Folgenden anhand der beigefügten, schematischen Zeichnungen weiter erläutert. Es zeigt:
- Figur 1: eine teilweise längsgeschnittene Ansicht einer ersten Ausführungsform einer erfindungsgemäßen Düse,
- Figur 2: eine teilweise längsgeschnittene Ansicht einer zweiten Ausführungsform einer erfindungsgemäßen Düse,
- Figur 3: eine teilweise längsgeschnittene dritten Ausführungsform einer erfindungsgemäßen Düse,
- Figur 4: eine teilweise längsgeschnittene Ansicht einer vierten Ausführungsform einer erfindungsgemäßen Düse,
- Figur 5: eine teilweise längsgeschnittene Ansicht einer fünften Ausführungsform einer erfindungsgemäßen Düse,
- Figur 6: eine teilweise längsgeschnittene Ansicht einer sechsten Ausführungsform einer erfindungsgemäßen Düse,
- Figur 7: eine teilweise längsgeschnittene Ansicht einer siebten Ausführungsform einer erfindungsgemäßen Düse,
- Figur 8: eine teilweise längsgeschnittene Ansicht einer achten Ausführungsform einer erfindungsgemäßen Düse, und
- Figur 9: eine teilweise längsgeschnittene Ansicht einer neunten Ausführungsform einer erfindungsgemäßen Düse, bei der eine Mischkammer als ein einen Hohlraum enthaltender Einsatz ausgebildet ist, der in ein Gehäuse der Düse eingesetzt ist.

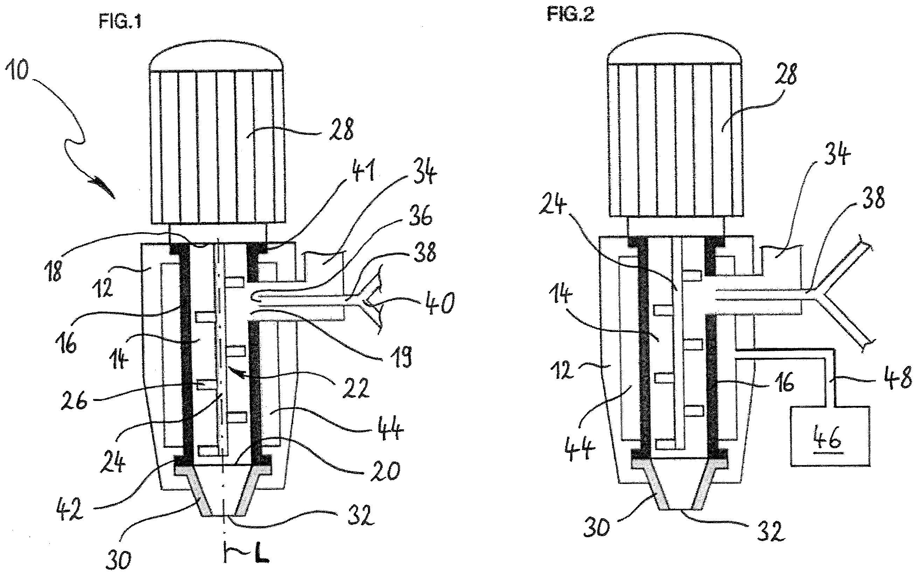

Figur 1 zeigt eine erste Ausführungsform einer Düse 10 zum Ausbringen von Beton, Mörtel oder dergleichen in einer teilweise längsgeschnittenen Ansicht. Die Düse 10 hat ein Gehäuse 12 mit einer darin angeordneten Mischkammer 14, die durch eine Umfangswand 16 begrenzt ist. Die im Zusammenhang mit den beigefügten Figuren verwendeten Begriffe "oben", "oberhalb", "unten", "unterhalb" und "seitlich" sind nicht absolut zu verstehen, sondern beziehen sich lediglich auf die in den Figuren wiedergegebene Darstellung der Düse 10. Es versteht sich, dass eine Düse 10 im Betrieb jede beliebige und erforderliche Orientierung einnehmen kann.

In den dargestellten Ausführungsformen hat die Mischkammer 14 eine kreiszylindrische Gestalt und die Umfangswand 16 hat demzufolge einen kreisringförmigen Querschnitt. Bei solchen Ausführungsformen können die Mischkammer 14 und die sie begrenzende Umfangswand 16 daher auch als ein Mischrohr bezeichnet werden.

Die Mischkammer 14 erstreckt sich in axialer Richtung entlang einer Längsachse L von einem in den Figuren oberen Ende 18 der Mischkammer 14 bis zu einem unteren Ende, das von einer Austrittsöffnung 20 gebildet ist. Insbesondere erstreckt sich die Mischkammer 14 zwischen einer hier seitlich angeordneten Zufuhröffnung 19 und der Austrittsöffnung 20. Die Zufuhröffnung 19 dient zum Einbringen des Betons, Mörtels oder dergleichen in die Mischkammer 14.

In der Mischkammer 14 befindet sich eine aktiv antreibbare Mischeinrichtung, hier in Gestalt eines Mischwerks 22 mit einer sich axial durch die Mischkammer 14 erstreckenden Mischwelle 24, an der mehrere radial nach außen hervorstehende Mischflügel 26 angebracht sind. Ein Elektromotor 28 ist mit dem oberen Ende der Mischwelle 24 verbunden und dient dazu, die Mischwelle 24 und damit das gesamte Mischwerk 22 drehend anzutreiben, um die Mischwelle 24 um die Längsachse L rotieren zu lassen. Statt des hier gezeigten Elektromotors 28 kann die Mischwelle 24 auch auf andere Weise mechanisch, pneumatisch oder hydrodynamisch angetrieben sein. Ebenso ist das dargestellte Mischwerk 22 lediglich beispielhaft zu sehen. Statt des gezeigten Mischwerks 22 kann jedes andere Mischwerk bzw. jede andere Mischeinrichtung Verwendung finden, mit dem bzw. mit der eine in der Mischkammer 14 gewünschte Vermischung erzielbar ist.

Unterhalb der Mischkammer 14 ist ein Düsenelement 30 angeordnet, welches an seinem unteren, freien Ende eine Austragsöffnung 32 der Düse 10 bildet. In den hier dargestellten Ausführungsformen ist das Düsenelement 30 jeweils am Gehäuse 12 befestigt und hat einen sich in Strömungsrichtung konisch verengenden Strömungsquerschnitt. Wie dargestellt steht die Austrittsöffnung 20 der Mischkammer 14 in strömungsleitender Verbindung mit dem Düsenelement 30 und damit mit der Austragsöffnung 32, so dass im Betrieb der Düse 10 Material aus der Mischkammer 14 durch die Austragsöffnung 32 ausgebracht werden kann.

Um auszubringendes Material in die Mischkammer 14 einleiten zu können, ist die Zufuhröffnung 19 der Mischkammer 14 mit einer Zufuhrleitung 34 verbunden, die sich von der Zufuhröffnung 19 durch das Gehäuse 12 nach außen erstreckt und die beispielsweise als ein Zufuhrrohr und/oder ein Zufuhrschlauch ausgestaltet sein kann. Durch die Zufuhrleitung 34 werden die Hauptbestandteile eines auszubringenden Materialgemisches der Mischkammer 14 zugeleitet. Beispielsweise kann die Zufuhrleitung 34 unmittelbar mit einer Beton- oder Mörtelmischeinrichtung (nicht gezeigt) verbunden sein, wobei die Beton- oder Mörtelmischeinrichtung Beton oder Mörtel oder dergleichen herstellt und durch die Zufuhrleitung 34 in die Mischkammer 14 der Düse 10 drückt.

Unter bestimmten Umständen ist es notwendig, dem durch die Zufuhrleitung 34 der Mischkammer 14 zugeführten Materialgemisch einen oder mehrere weitere Stoffe zuzusetzen, um die Eigenschaften des mit der Düse 10 auszubringenden Materialgemisches genau einzustellen. Soll beispielsweise das auszubringende Materialgemisch schnell aushärten, so ist es notwendig, dem Materialgemisch kurz vor seiner Ausbringung einen die Aushärtzeit verkürzenden Zusatzstoff zuzusetzen. Hierzu dient eine Zusatzöffnung 36, die bei der in Figur 1 gezeigten ersten Ausführungsform der Düse 10 konzentrisch zur Zufuhröffnung 19 innerhalb der Zufuhröffnung 19 angeordnet ist und die mit einer Zusatzstoffleitung 38 verbunden ist, welche wie die Zufuhrleitung 34 aus dem Gehäuse 12 der Düse 10 herausgeführt ist. Außerhalb der Zufuhrleitung 34 ist bei 40 schematisch eine Verzweigung der Zusatzstoffleitung 38 gezeigt, so dass durch die Zusatzstoffleitung 38 wenigstens zwei Zusatzstoffe zugleich der Mischkammer 14 zugeführt werden können.

Die Umfangswand 16 der Mischkammer 14 besteht aus einem elastisch nachgiebigem Material wie beispielsweise Gummi, Kautschuk (jeweils natürlich oder auch synthetisch) oder auch einem elastischen Kunststoffmaterial, welches je nach Einsatzzweck der Düse 10 so gewählt ist, dass es die erforderliche Beständigkeit gegenüber mechanischen, chemischen und thermischen Einflüssen aufweist. Am oberen und unteren Ende der Umfangswand 16 ist jeweils ein Flansch 41, 42 ausgebildet, der zum Festlegen des entsprechenden Endes der Umfangswand 16 am Gehäuse 12 dient. Bei geeigneter Dimensionierung der Flansche 41, 42 können diese auch zur Abdichtung der Mischkammer 14 gegenüber dem Gehäuse 12, dem Motor 28 und dem Düsenelement 30 dienen.

Zwischen der Umfangswand 16 der Mischkammer 14 und dem Gehäuse 12 ist im Gehäuse 12 ein sich axial und in Umfangsrichtung erstreckender Hohlraum 44 ausgebildet, dessen radial innere Begrenzung die Außenseite der Umfangswand 16 darstellt, so dass der Hohlraum 44 in unmittelbarem Kontakt mit der Umfangswand 16 steht. Der Hohlraum 44 verläuft in der dargestellten, ersten Ausführungsform vollständig um die Mischkammer 44 herum und erstreckt sich axial über nahezu die gesamte Länge der Mischkammer 44.

Im Betrieb der Düse 10 kommt es aufgrund der durch die Zufuhröffnung 19 stattfindenden Materialzufuhr, die mit einem gewissen Druck erfolgt, und auch durch die Rührbewegung des Mischwerks 22 in der Mischkammer 14 zu wechselnden Drücken, die auf die Innenseite der Umfangswand 16 einwirken. Diese im Betrieb ständig variierenden Druckverhältnisse in der Mischkammer 14 haben zur Folge, dass die Umfangswand 16 sich aus ihrer in Figur 1 dargestellten Ausgangsform immer wieder lokal in den Hohlraum 44 hinein verformt und dann wieder, bei entsprechenden anderen Druckverhältnissen, in ihre Ausgangsform zurückfedert. Der Hohlraum 44 ist speziell dazu vorgesehen, eine solche, wenigstens zeitweilige lokale oder auch großflächigere Verformung der Umfangswand 16 nach radial außen zuzulassen. Diese im Betrieb der Düse 10 fortlaufend neu entstehende Verformung der Umfangswand 16 nach radial außen und wieder zurück hat zur Folge, dass sich an der Innenseite der Umfangswand 16 keine oder nur sehr geringe Ablagerungen festsetzen können. Um diesen Effekt zu erreichen, braucht sich die Umfangswand 16 nicht stark zu verformen, vielmehr reichen Verformungen im Bereich weniger Millimeter aus, um ein "Abplatzen" bereits gebildeter Ablagerungen zu erreichen und eine Bildung neuer Ablagerungen zu verhindern.

Die im Folgenden beschriebenen, weiteren Ausführungsformen einer erfindungsgemäßen Düse 10 ähneln alle der ersten Ausführungsform und werden daher nur hinsichtlich ihrer Unterschiede zur ersten Ausführungsform näher erläutert.

Figur 2 zeigt eine zweite Ausführungsform einer erfindungsgemäßen Düse 10 ebenfalls in einer teilweise längsgeschnittenen Ansicht. Zusätzlich zur in Figur 1 gezeigten ersten Ausführungsform weist die zweite Ausführungsform eine Druckaufbringungseinrichtung 46 auf, welche es ermöglicht, dem Hohlraum 44 über eine Leitung 48 Druck zuzuführen, um so den Hohlraum 44 wahlweise unter Druck zu setzen. Dadurch kann im Betrieb der Düse 10 eine Verformung der Umfangswand 16 nach radial innen, d. h. in Richtung der Mischwelle 24, erreicht werden, was den Selbstreinigungseffekt unterstützt bzw. verstärkt, der durch die im Zusammenhang mit der ersten Ausführungsform beschriebene Verformung der Umfangswand 16 nach radial außen erzielt wird. Ein mittels der Druckaufbringungseinrichtung 46 erzieltes unter Druck setzen des die Mischkammer 14 umgebenden Hohlraums 44 kann intermittierend erfolgen, d. h. der Hohlraum 44 kann in gewünschten zeitlichen Intervallen unter Druck gesetzt und dann wieder druckentlastet werden, so dass die Umfangswand 16 sich im Betrieb der Düse 10 abwechselnd radial auswärts und radial einwärts verformt. Dabei kann eine Verformung der Umfangswand 16 nach radial einwärts bis zu einem Kontakt der Innenseite der Umfangswand 16 mit den Mischflügeln 26 erfolgen, so dass die mit der Mischwelle 24 rotierenden Mischflügel 26 die Innenseite der Umfangswand 16 schabend reinigen und zugleich Ablagerungen gelöst werden können, die sich möglicherweise an den Mischflügeln 26 gebildet haben.

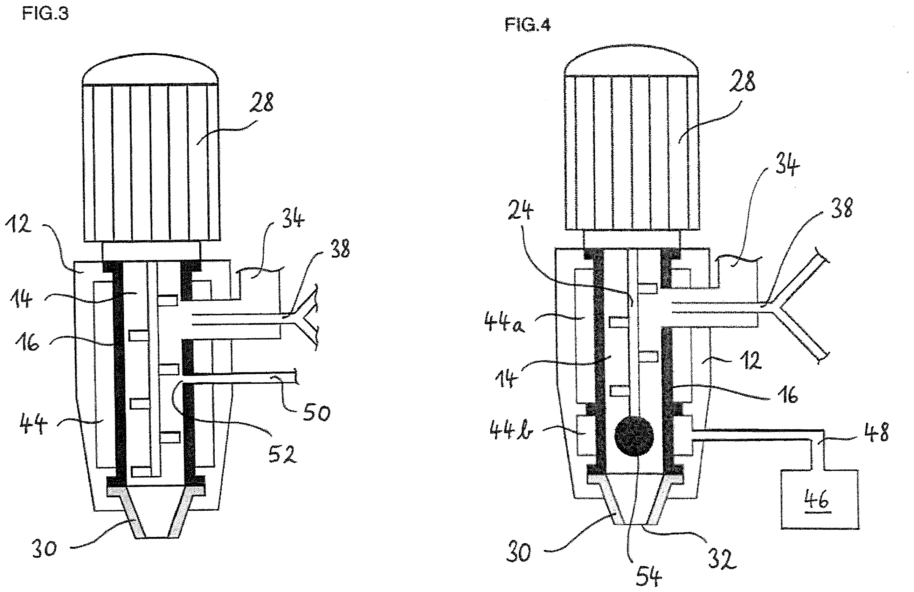

Figur 3 zeigt eine dritte Ausführungsform einer erfindungsgemäßen Düse 10 wiederum in teilweise längsgeschnittener Ansicht. Zusätzlich zur in Figur 1 gezeigten, ersten Ausführungsform weist diese dritte Ausführungsform eine weitere Zusatzstoffleitung 50 auf, die mit einer weiteren Zusatzöffnung 52 in der Umfangswand 16 in Verbindung steht, durch die falls gewünscht ein weiterer Zusatzstoff unmittelbar in die Mischkammer 14 eingeschleust werden kann. Die weitere Zusatzöffnung 52 kann ferner dazu benutzt werden, bestimmte Zusatzstoffe an einer weiter unten gelegenen Stelle der Mischkammer 14 zuzuführen, beispielsweise um deren Verweilzeit in der Mischkammer 14 zu reduzieren. Dies kann beispielsweise im Falle eines Zusatzstoffs wünschenswert sein, der die Aushärtzeit von Beton, Mörtel oder dergleichen verkürzt.

Figur 4 zeigt eine vierte Ausführungsform einer erfindungsgemäßen Düse 10 in teilweise längsgeschnittener Ansicht. Im Unterschied zur ersten Ausführungsform sind statt des Hohlraums 44 zwei Hohlräume 44a, 44b vorhanden, die sich jeweils vollständig um die Mischkammer 44 herum erstrecken und axial aufeinander folgend angeordnet sind. Der in Figur 4 obere Hohlraum 44a verläuft etwa vom oberen Ende 18 der Mischkammer 14 über ca. 75% der Länge der Mischkammer 14, wohingegen der untere Hohlraum 44b die verbleibenden ca. 25% der Längserstreckung der Mischkammer 14 überdeckt. Ferner ist am unteren Ende der Mischwelle 24 ein Strömungsquerschnittreduzierungselement 54 angebracht, welches hier eine kugelförmige Gestalt hat und mittig in der Mischkammer 14 angeordnet ist. Im Betrieb der Düse 10 strömt das auszubringende Materialgemisch an dem Strömungsquerschnittreduzierungselement 54 vorbei zur Austrittsöffnung 20 der Mischkammer und weiter durch die Austragsöffnung 32 des Düsenelements 30.

Wie dargestellt ist bei der vierten Ausführungsform die Druckaufbringungseinrichtung 46 über die Leitung 48 mit dem unteren Hohlraum 44b verbunden. Dies ermöglicht es, den unteren Hohlraum 44b selektiv unter Druck zu setzen und dadurch die Umfangswand 16 in diesem Bereich so weit radial einwärts zu verformen, dass sie am Strömungsquerschnittreduzierungselement 54 anliegt, um so einen Materialfluss aus der Düse 10 zeitweise zu stoppen. Durch einfaches Druckentlasten des Hohlraums 44b kehrt die Umfangswand 16 im Bereich des unteren Hohlraums 44b wieder in ihre Ausgangsstellung zurück und öffnet damit die Düse 10. Auf diese Weise kann die Düse 10 mit einem zuverlässig und schnell reagierenden Ventil zum Stoppen und Freigeben des Materialflusses durch die Düse 10 ausgestattet werden. Selbstverständlich kann die Druckaufbringungseinrichtung 46 im Betrieb der Düse 10 auch dazu verwendet werden, die Umfangswand 16 wie zuvor im Zusammenhang mit der zweiten Ausführungsform beschrieben zu verformen. Darüber hinaus kann auch der obere Hohlraum 44a mit der Druckaufbringungseinrichtung 46 oder einer anderen Druckaufbringungseinrichtung gekoppelt sein, um auch den dem oberen Hohlraum 44a zugehörigen Teil der Umfangswand 16 so zu verformen wie im Zusammenhang mit der zweiten Ausführungsform beschrieben.

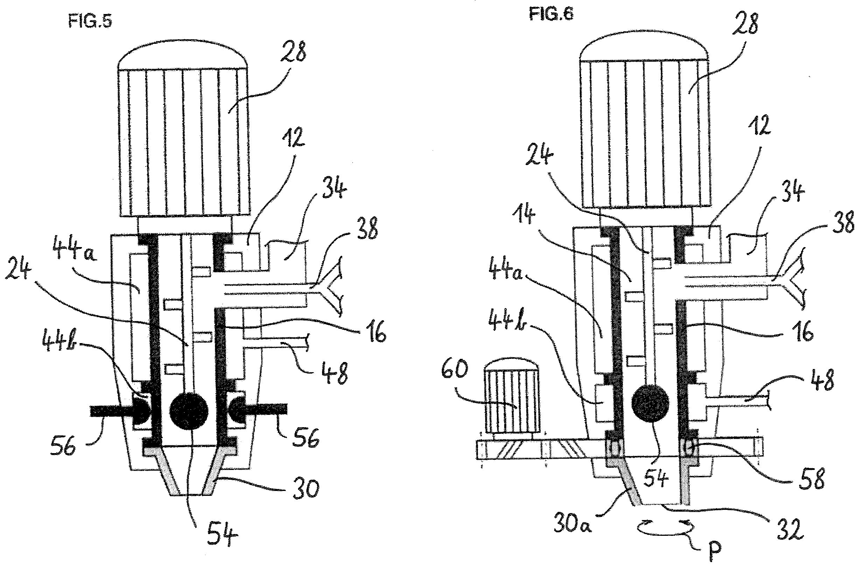

Figur 5 zeigt eine fünfte Ausführungsform einer erfindungsgemäßen Düse 10 in teilweise längsgeschnittener Ansicht. Diese fünfte Ausführungsform stellt eine Kombination der zweiten und vierten Ausführungsform dar, wobei die radial einwärts gerichtete Verformung des dem unteren Hohlraum 44b zugehörigen Abschnitts der Umfangswand 16 nicht pneumatisch mittels der Druckaufbringungseinrichtung 46, sondern mittels mechanischer Stellglieder 56 erfolgt. Solche mechanischen Stellglieder 56 können beispielsweise mechanisch angetriebene Stempel sein, die die Umfangswand 16 radial einwärts drücken, oder auch eine mechanisch angetriebene Irisblende, welche beim Zufahren ihren freien Querschnitt verringert und dadurch die Umfangswand 16 einschnürt und gegen das Strömungsquerschnittreduzierungselement 54 drückt. Andere Lösungen sind ebenfalls denkbar. Der obere Hohlraum 44a ist über die Leitung 48 mit der Druckaufbringungseinrichtung 46 (in Fig. 5 nicht dargestellt) verbunden.

Figur 6 zeigt eine sechste Ausführungsform einer erfindungsgemäßen Düse 10 in teilweise längsgeschnittener Ansicht. Diese Ausführungsform entspricht in ihrem Aufbau grundsätzlich der vierten Ausführungsform, jedoch ist das Düsenelement 30a bei 58 drehbar gelagert und kann mittels eines Stellantriebs 60 auch im laufenden Betrieb der Düse 10 in jede gewünschte Richtung gedreht werden (in Fig. 6 durch den Pfeil P symbolisiert). Das Düsenelement 30a ist dabei im Unterschied zum Düsenelement 30 so ausgebildet, dass eine Drehung des Düsenelements 30a um die Längsachse L zu einer veränderten Abstrahlrichtung führt.

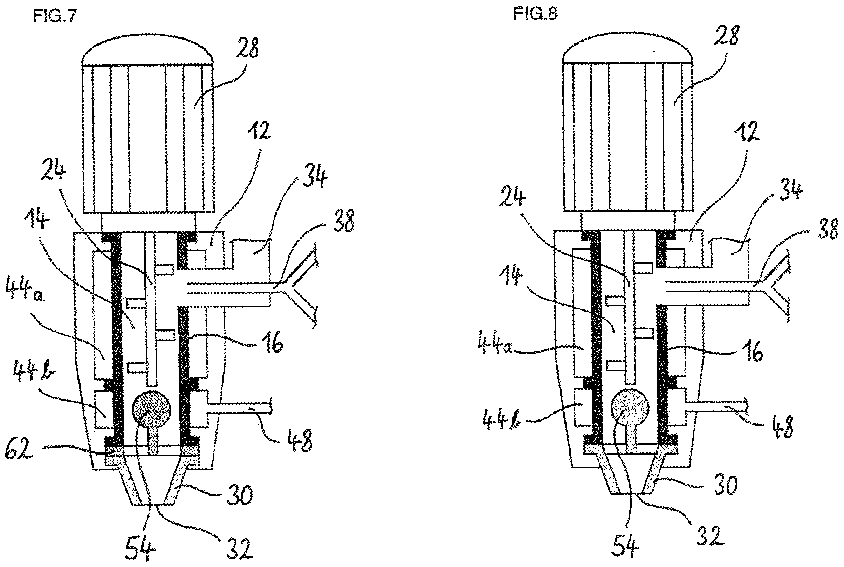

Figur 7 zeigt eine siebte Ausführungsform einer erfindungsgemäßen Düse 10 in teilweise längsgeschnittener Ansicht. Diese siebte Ausführungsform entspricht im Wesentlichen der vierten Ausführungsform, jedoch ist das Strömungsquerschnittreduzierungselement 54 bei der siebten Ausführungsform nicht an der Mischwelle 24 befestigt, sondern an einem Flansch 62, der axial zwischen dem unteren Ende der Mischkammer 14 und dem Düsenelement 30 im Gehäuse 12 angeordnet ist und das Strömungsquerschnittreduzierungselement 54 trägt, das sich vom Flansch 62 in den unteren Endabschnitt der Mischkammer 14 hinein erstreckt. Eine solche Ausgestaltung ermöglicht einen einfachen Austausch des Strömungsquerschnittreduzierungselements 54 gegen ein neues oder auch anderes Strömungsquerschnittreduzierungselement, ohne dass ein Zugriff auf die Mischwelle 24 erfolgen muss.

Figur 8 zeigt eine achte Ausführungsform einer erfindungsgemäßen Düse 10 in teilweise längsgeschnittener Ansicht, die sich von der siebten Ausführungsform dadurch unterscheidet, dass das Strömungsquerschnittreduzierungselement 54 am Düsenelement 30 befestigt ist und sich vom Düsenelement 30 in den unteren Endabschnitt der Mischkammer 44 erstreckt. Bei einer solchen Ausführungsform kann das Strömungsquerschnittreduzierungselement 54 einfach zusammen mit dem Düsenelement 30 ausgetauscht oder ersetzt werden. Zudem kann ein spezifisch geformtes Strömungsquerschnittreduzierungselement, welches für ein bestimmtes Düsenelement besonders geeignet ist, auf diese Weise verwechslungssicher mit dem bestimmten Düsenelement kombiniert werden.

Das Strömungsquerschnittreduzierungselement 54 ist in den gezeigten Ausführungsformen jeweils als eine kugelförmige Gestalt aufweisend dargestellt worden. Diese Kugelform ist jedoch nur beispielhaft. Das Strömungsquerschnittreduzierungselement kann beispielsweise auch tropfenförmig ausgestaltet sein, wobei dann vorzugsweise das spitze Ende der Tropfenform der Austragsöffnung 32 zugewandt ist. Andere räumliche Ausgestaltungen des Strömungsquerschnittreduzierungselements sind ebenfalls denkbar und können zur Beeinflussung des Strömungsverhaltens in dem Endabschnitt der Mischkammer 44 verwendet werden.

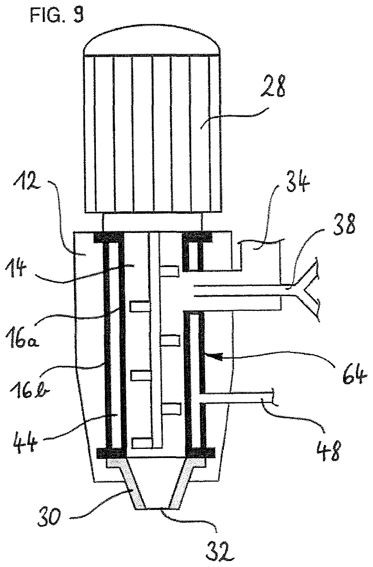

Figur 9 zeigt eine neunte Ausführungsform einer erfindungsgemäßen Düse 10 in teilweise längsgeschnittener Ansicht, die im Wesentlichen der in Figur 2 gezeigten zweiten Ausführungsform entspricht. Jedoch ist bei der neunten Ausführungsform der Hohlraum 44 Bestandteil eines die Mischkammer 14 bildenden Einsatzes 64, der in das Gehäuse 12 der Düse 10 eingesetzt ist. Der Einsatz 64 kann wie die Umfangswand 16 der zuvor erläuterten Ausführungsformen beispielsweise aus einem geeigneten Kunststoff bestehen und weist eine radial innere Umfangswand 16a und eine von dieser radial beabstandete, radial äußere Umfangswand 16b auf. Zwischen der radial inneren Umfangswand 16a und der radial äußeren Umfangswand 16b befindet sich der Hohlraum 44. Der Einsatz 64 kann statt des einen Hohlraums 44 auch mehrere Hohlräume enthalten (nicht gezeigt).

Bei allen zuvor erläuterten Ausführungsformen der Düse 10 handelt es sich um beispielhafte Ausgestaltungen. Jeder Fachmann wird verstehen, dass viele Merkmale der gezeigten Ausführungsformen auch bei anderen Ausführungsformen Verwendung finden können. Beispielsweise können alle Ausführungsformen eine weitere Zusatzstoffleitung 50 und eine weitere Zusatzöffnung 52 aufweisen oder auch mehrere solcher Zusatzstoffleitungen und Zusatzöffnungen. Ferner können statt des Hohlraums 44 mehr als nur zwei Hohlräume 44a, 44b vorhanden sein und es können alle, einige oder keiner der Hohlräume mit einer Druckaufbringungseinrichtung 46 in Verbindung stehen.

## Patentansprüche

1. Ausbringungsdüse (10) für Beton, Mörtel oder dergleichen, mit
- einem Gehäuse (12) und einer darin angeordneten, durch eine Umfangswand (16) begrenzten Mischkammer (14), die sich entlang einer Längsachse (L) zumindest zwischen einer Zufuhröffnung (19) und einer Austrittsöffnung (20) erstreckt,
- einer in der Mischkammer (14) angeordneten, aktiv antreibbaren Mischeinrichtung, und
- einem Düsenelement (30; 30a) mit einer Austragsöffnung (32), die mittelbar oder unmittelbar mit der Austrittsöffnung (20) der Mischkammer (14) in strömungsleitender Verbindung steht,
**dadurch gekennzeichnet, dass**
- wenigstens ein sich axial und in Umfangsrichtung erstreckender Hohlraum (44; 44a, 44b) um die Umfangswand (16) der Mischkammer (14) herum angeordnet ist, der in Kontakt mit der Umfangswand (16) steht und die Mischkammer (14) in Umfangsrichtung zumindest im Wesentlichen umgibt,
- die Umfangswand (16) der Mischkammer (14) aus elastischem Material besteht, welches sich im Betrieb der Düse dynamisch in den wenigstens einen Hohlraum (44; 44a, 44b) hinein verformen kann.

2. Ausbringungsdüse nach Anspruch 1,
**dadurch gekennzeichnet, dass** der wenigstens eine Hohlraum (44; 44a, 44b) sich über zumindest im Wesentlichen die gesamte Länge der Mischkammer (14) erstreckt.

3. Ausbringungsdüse nach Anspruch 1,
**dadurch gekennzeichnet, dass** der wenigstens eine Hohlraum über die Länge der Mischkammer (14) gesehen mehrere die Mischkammer (14) in Umfangsrichtung zumindest im Wesentlichen umgebende Hohlräume (44; 44a, 44b) umfasst.

4. Ausbringungsdüse nach einem der Ansprüche 1 bis 3,
**dadurch gekennzeichnet, dass** eine Druckaufbringungseinrichtung (46) vorhanden ist, die mit dem wenigstens einen Hohlraum (44; 44a, 44b) verbunden ist, um durch Aufbringen von Druck die Umfangswand (16) der Mischkammer (14) in die Mischkammer hinein zu verformen.

5. Ausbringungsdüse nach einem der Ansprüche 1 bis 4,
**dadurch gekennzeichnet, dass** der wenigstens eine Hohlraum (44; 44a, 44b) Teil eines die Mischkammer (14) bildenden Einsatzes (64) ist, der in das Gehäuse (12) einsetzbar ist.

6. Ausbringungsdüse nach Anspruch 3 und 4,
**dadurch gekennzeichnet, dass** in einem die Austrittsöffnung (20) der Mischkammer (14) umfassenden Endabschnitt der Mischkammer (14) ein Strömungsquerschnittreduzierungselement (54) mittig in der Mischkammer (14) angeordnet ist und dass einer (44b) der mehreren Hohlräume (44a, 44b) im Bereich des Strömungsquerschnittreduzierungselements (54) angeordnet ist und die Mischkammer (14) in Umfangsrichtung vollständig umgibt.

7. Ausbringungsdüse nach Anspruch 6,
**dadurch gekennzeichnet, dass** der Teil der Umfangswand (16), der dem im Bereich des Strömungsquerschnittreduzierungselements (54) angeordneten Hohlraum (44b) zugehörig ist, durch Aufbringen von Druck in die Mischkammer (14) hinein bis zum Anliegen am Strömungsquerschnittreduzierungselement (54) verformbar ist.

8. Ausbringungsdüse nach Anspruch 7,
**dadurch gekennzeichnet, dass** das Aufbringen von Druck auf den Teil der Umfangswand (16), der dem im Bereich des Strömungsquerschnittreduzierungselements (54) angeordneten Hohlraum (44b) zugehörig ist, durch pneumatische, hydraulische oder mechanische Mittel erfolgt.

9. Ausbringungsdüse nach einem der Ansprüche 6 bis 8,
**dadurch gekennzeichnet, dass** das Strömungsquerschnittreduzierungselement (54) an einem Flansch (62) befestigt ist, der sich zwischen der Austrittsöffnung (20) der Mischkammer (14) und der Austragsöffnung (32) befindet.

10. Ausbringungsdüse nach einem der Ansprüche 6 bis 8,
**dadurch gekennzeichnet, dass** das Strömungsquerschnittreduzierungselement (54) an dem die Austragsöffnung (32) bildenden Düsenelement (30) befestigt ist.

11. Ausbringungsdüse nach einem der vorhergehenden Ansprüche,
**dadurch gekennzeichnet, dass** die Mischeinrichtung sich von der Zufuhröffnung (19) bis in einen die Austrittsöffnung (20) der Mischkammer (14) umfassenden Endabschnitt der Mischkammer (14) erstreckt.

12. Ausbringungsdüse nach Anspruch 11,
**dadurch gekennzeichnet, dass** die Mischeinrichtung eine sich zumindest im Wesentlichen axial erstreckende, drehbare Mischwelle (24) umfasst.

13. Ausbringungsdüse nach Anspruch 12 in Verbindung mit einem der Ansprüche 6 bis 8,
**dadurch gekennzeichnet, dass** die Mischwelle (24) an ihrem der Austrittsöffnung (20) der Mischkammer (14) zugewandten Ende einen das Strömungsquerschnittreduzierungselement (54) bildenden, verdickten Mischwellenkopf aufweist.

14. Ausbringungsdüse nach einem der Ansprüche 6 bis 10 oder 13,
**dadurch gekennzeichnet, dass** das Strömungsquerschnittreduzierungselement (54) kugel- oder tropfenförmig ist.

15. Ausbringungsdüse nach einem der vorhergehenden Ansprüche,
**dadurch gekennzeichnet, dass** konzentrisch zur Zufuhröffnung (19) eine Zusatzöffnung (36) zur Einbringung eines oder mehrerer Zusatzstoffe in die Mischkammer (14) angeordnet ist.

16. Ausbringungsdüse nach einem der vorhergehenden Ansprüche,
**dadurch gekennzeichnet, dass** die Austragsöffnung (32) Teil eines beweglichen Düsenelements (30a) ist.

17. Ausbringungsdüse nach Anspruch 16,
**dadurch gekennzeichnet, dass** das Düsenelement (30a) motorisch verstellbar ist.

## Claims

1. A dispensing nozzle (10) for concrete, mortar or the like, comprising
- a housing (12) and a mixing chamber (14), which is arranged therein and is delimited by a circumferential wall (16) and which extends along a longitudinal axis (L) at least between a supply opening (19) and an outlet opening (20),
- an actively driveable mixing device, which is arranged in the mixing chamber (14), and
- a nozzle element (30; 30a) with an exit opening (32), which is directly or indirectly flow-connected to the outlet opening (20) of the mixing chamber (14),
**characterised in that**
- at least one cavity (44; 44a, 44b), which extends axially and in the circumferential direction, is arranged around the circumferential wall (16) of the mixing chamber (14), which at least one cavity (44; 44a, 44b) is in contact with the circumferential wall (16) and which at least substantially surrounds the mixing chamber (14) in the circumferential direction,
- the circumferential wall (16) of the mixing chamber (14) consists of elastic material, which is configured to deform dynamically into the at least one cavity (44; 44a, 44b) during operation of the nozzle.

2. The dispensing nozzle according to claim 1,
**characterised in that** the at least one cavity (44; 44a, 44b) extends over at least substantially the entire length of the mixing chamber (14).

3. The dispensing nozzle according to claim 1,
**characterised in that** the at least one cavity, seen over the length of the mixing chamber (14), comprises several cavities (44; 44a, 44b) at least substantially surrounding the mixing chamber (14) in the circumferential direction.

4. The dispensing nozzle according to any one of claims 1 to 3,
**characterised in that** a pressure application device (46) is present, which is connected to the at least one cavity (44; 44a, 44b) in order to deform the circumferential wall (16) of the mixing chamber (14) into the mixing chamber (14) by applying pressure.

5. The dispensing nozzle according to any one of claims 1 to 4,
**characterised in that** the at least one cavity (44; 44a, 44b) is part of an insert (64) forming the mixing chamber (14), which insert is configured to be inserted into the housing (12).

6. The dispensing nozzle according to claim 3 and 4,
**characterised in that** a flow cross-section reduction element (54) is arranged centrally in the mixing chamber (14) in an end section of the mixing chamber (14), the end section comprising the outlet opening (20) of the mixing chamber (14), and that one (44b) of the several cavities (44a, 44b) is arranged in the region of the flow cross-section reduction element (54) and completely surrounds the mixing chamber (14) in the circumferential direction.

7. The dispensing nozzle according to claim 6,
**characterised in that** the portion of the circumferential wall (16) that is associated with the cavity (44b) arranged in the region of the flow cross-section reduction element (54) is deformable into the mixing chamber (14) by application of pressure until it rests on the flow cross-section reduction element (54).

8. The dispensing nozzle according to claim 7,
**characterised in that** the application of pressure to the portion of the circumferential wall (16) associated with the cavity (44b) arranged in the region of the flow cross-section reduction element (54) is achieved by pneumatic, hydraulic or mechanical means.

9. The dispensing nozzle according to any one of claims 6 to 8,
**characterised in that** the flow cross-section reduction element (54) is attached to a flange (62), which is located between the outlet opening (20) of the mixing chamber (14) and the exit opening (32).

10. The dispensing nozzle according to any one of claims 6 to 8,
**characterised in that** the flow cross-section reduction element (54) is attached to the nozzle element (30) forming the exit opening (32).

11. The dispensing nozzle according to any one of the preceding claims,
**characterised in that** the mixing device extends from the supply opening (19) up to an end section of the mixing chamber (14), the end section comprising the outlet opening (20) of the mixing chamber (14).

12. The dispensing nozzle according to claim 11,
**characterised in that** the mixing device comprises a rotatable mixing shaft (24) extending at least substantially axially.

13. The dispensing nozzle according to claim 12 in conjunction with any one of Claims 6 to 8,
**characterised in that** the mixing shaft (24) is provided, at its end facing the outlet opening (20) of the mixing chamber (14), with a thickened mixing shaft head forming the flow cross-section reduction element (54).

14. The dispensing nozzle according to any one of claims 6 to 10 or 13,
**characterised in that** the flow cross-section reduction element (54) is spherical or drop-shaped.

15. The dispensing nozzle according to any one of the preceding claims,
**characterised in that** an additional opening (36) for introducing one or more additives into the mixing chamber (14) is arranged concentric to the supply opening (19).

16. The dispensing nozzle according to any one of the preceding claims,
**characterised in that** the exit opening (32) is part of a movable nozzle element (30a).

17. The dispensing nozzle according to claim 16,
**characterised in that** the nozzle element (30a) is motor-adjustable.

## Revendications

1. Buse de distribution (10) pour le béton, le mortier ou similaire, comprenant
- un boîtier (12) et une chambre de mélange (14) disposée dans celui-ci, délimitée par une paroi périphérique (16), qui s'étend le long d'un axe longitudinal (L) au moins entre une ouverture d'alimentation (19) et une ouverture de sortie (20),
- un dispositif de mélange disposé dans la chambre de mélange (14) et pouvant être entraîné activement, et
- un élément de buse (30; 30a) avec une ouverture de décharge (32), qui est relié de manière fluidique directement ou indirectement à l'ouverture de sortie (20) de la chambre de mélange (14),
**caractérisée en ce qu'**
- au moins une cavité (44; 44a, 44b) s'étendant axialement et dans la direction circonférentielle est disposée autour de la paroi circonférentielle (16) de la chambre de mélange (14), laquelle cavité est en contact avec la paroi circonférentielle (16) et entoure au moins sensiblement la chambre de mélange (14) dans la direction circonférentielle,
- la paroi périphérique (16) de la chambre de mélange (14) est constituée d'un matériau élastique qui peut se déformer dynamiquement dans l'au moins une cavité (44; 44a, 44b) pendant le fonctionnement de la buse.

2. Buse de distribution selon la revendication 1,
**caractérisée en ce que** l'au moins une cavité (44; 44a, 44b) s'étend sur au moins sensiblement toute la longueur de la chambre de mélange (14).

3. Buse de distribution selon la revendication 1,
**caractérisée en ce que** l'au moins une cavité, vue sur la longueur de la chambre de mélange (14), comprend plusieurs cavités (44; 44a, 44b) entourant au moins sensiblement la chambre de mélange (14) dans la direction circonférentielle.

4. Buse de distribution selon l'une quelconque des revendications 1 à 3,
**caractérisée en ce qu'**un dispositif d'application de pression (46) qui est relié à l'au moins une cavité (44; 44a, 44b), sert à déformer la paroi périphérique (16) de la chambre de mélange (14) par application de pression dans la chambre de mélange.

5. Buse de distribution selon l'une quelconque des revendications 1 à 4,
**caractérisée en ce que** l'au moins une cavité (44; 44a, 44b) fait partie d'un élément inséré (64) formant la chambre de mélange (14), qui peut être inséré dans le boîtier (12).

6. Buse de distribution selon la revendication 3 ou 4,
**caractérisée en ce que** dans une section d'extrémité de la chambre de mélange (14) comprenant l'ouverture de sortie (20) de la chambre de mélange (14), un élément de réduction de la section d'écoulement (54) est disposé au centre de la chambre de mélange (14) et **en ce que** l'une (44b) de la pluralité de cavités (44a, 44b) est disposée dans la zone de l'élément de réduction de la section d'écoulement (54) et entoure complètement la chambre de mélange (14) dans la direction circonférentielle.

7. Buse de distribution selon la revendication 6,
**caractérisée en ce que** la partie de la paroi périphérique (16) qui appartient à la cavité (44b) disposée dans la zone de l'élément de réduction de la section d'écoulement (54) peut être déformée par application de pression dans la chambre de mélange (14) jusqu'à ce qu'elle s'applique contre l'élément de réduction de la section d'écoulement (54).

8. Buse de distribution selon la revendication 7,
**caractérisée en ce que** l'application de pression sur la partie de la paroi périphérique (16) qui appartient à la cavité (44b) ménagée dans la zone de l'élément de réduction de la section d'écoulement (54) s'effectue par des moyens pneumatiques, hydrauliques ou mécaniques.

9. Buse de distribution selon l'une quelconque des revendications 6 à 8,
**caractérisée en ce que** l'élément de réduction de la section d'écoulement (54) est fixé à un rebord (62) qui est situé entre l'ouverture de sortie (20) de la chambre de mélange (14) et l'ouverture de décharge (32).

10. Buse de distribution selon l'une quelconque des revendications 6 à 8,
**caractérisée en ce que** l'élément de réduction de la section d'écoulement (54) est fixé à l'élément de buse (30) formant l'ouverture de décharge (32).

11. Buse de distribution selon l'une quelconque des revendications précédentes,
**caractérisée en ce que** le dispositif de mélange s'étend depuis l'ouverture d'alimentation (19) jusque dans une section d'extrémité de la chambre de mélange (14) comprenant l'ouverture de sortie (20) de la chambre de mélange (14).

12. Buse de distribution selon la revendication 11,
**caractérisée en ce que** le dispositif de mélange comprend un arbre de mélange rotatif (24) s'étendant au moins sensiblement axialement.

13. Buse de distribution selon la revendication 12 en association avec l'une quelconque des revendications 6 à 8,
**caractérisée en ce que** l'arbre de mélange (24) présente, à son extrémité tournée vers l'ouverture de sortie (20) de la chambre de mélange (14), une tête d'arbre de mélange épaissie formant l'élément de réduction de la section d'écoulement (54).

14. Buse de distribution selon l'une quelconque des revendications 6 à 10 ou 13,
**caractérisée en ce que** l'élément de réduction de la section d'écoulement (54) est en forme de sphère ou de goutte.

15. Buse de distribution selon l'une quelconque des revendications précédentes,
**caractérisée en ce qu'**une ouverture supplémentaire (36) est disposée concentriquement à l'ouverture d'alimentation (19) pour introduire un ou plusieurs additifs dans la chambre de mélange (14).

16. Buse de distribution selon l'une quelconque des revendications précédentes,
**caractérisée en ce que** l'ouverture de décharge (32) fait partie d'un élément de buse mobile (30a).

17. Buse de distribution selon la revendication 16,
**caractérisée en ce que** l'élément de buse (30a) est réglable par moteur.
